# EUROPÄISCHE PATENTSCHRIFT

(11) **EP 0 540 968 B1**
(45) Veröffentlichungstag und Bekanntmachung des Hinweises auf die Patenterteilung: **27.03.1996**
(21) Anmeldenummer: 92118258.0
(22) Anmeldetag: 26.10.1992
(51) Int. Cl.: H02P 9/44

(54) **Einrichtung zur Erzeugung elektrischer Energie**
Device to produce electrical energy
Dispositif de production d'énergie électrique

(30) Priorität: 07.11.1991 DE 4136692
(43) Veröffentlichungstag der Anmeldung: 12.05.1993
(73) Patentinhaber: SIEMENS AKTIENGESELLSCHAFT, D-80333 München (DE)
(72) Erfinder: Rosenberg, Heinz, Dipl.-Ing., A-2752 Wöllersdorf (AT)

(56) Entgegenhaltungen:
- EP-A- 0 099 803
- DD-A- 127 783
- DE-A- 3 345 210
- GB-A- 2 142 451
- US-A- 4 752 751

## Beschreibung

Die Erfindung betrifft eine Einrichtung zur Erzeugung elektrischer Energie, welche Einrichtung mindestens einen mit einer von einem strömenden Medium angetriebenen Turbine gekuppelten Wechselstromgenerator aufweist.

Handelt es sich bei einer solchen Einrichtung um eine Wind- oder Wasserkraftanlage, dann ist die von dem strömenden Medium auf die Turbine ausgeübte Antriebskraft starken Schwankungen unterworfen. Um die in dem strömenden Medium enthaltene Energie möglichst optimal in elektrische Energie umsetzen zu können, hat man bisher über aufwendige Regeleinrichtungen jeweils eine den Schwankungen des strömenden Mediums entsprechende Verstellung der Turbinenschaufel vorgenommen. Dies setzt wiederum eine Ausgestaltung der Turbine mit einem geeigneten Verstellmechanismus für die Schaufeln voraus.

Im Stand der Technik sind Regeleinrichtungen für in ihrer Antriebsdrehzahl veränderliche Antriebe von Generatoren geläufig. So ist aus der US-A-4 752 751 ein mit einem drehzahlvariablen Antrieb gekuppelter, dauermagneterregter Generator bekannt. An die Ausgangsklemmen des Generators sind Reihen-LC-Kreise angeschlossen, deren Resonanzfrequenz so gewählt ist, daß sie unter der niedrigsten Betriebsfrequenz des Generators liegt. Hierdurch werden Verzerrungen der Ausgangsspannung des Generators ausgefiltert und somit einwandfreie Steuersignale für die steuerbaren Elemente des Stromrichters gewonnen. Mittels dieser gewonnenen Steuersignale wird der Stromrichter so gesteuert, daß eine von Drehzahländerungen des Generators möglichst unabhängige Ausgangsspannung erzielt wird. An dem Stromrichter liegt somit keine eingeprägte Ausgangsspannung an.

Die EP-A-0 099 803 beschreibt eine Regeleinrichtung für Asynchronmaschinen, mit der Asynchronmotoren in ihrer Drehzahl und Asynchrongeneratoren in ihrer Spannung geregelt werden können. Für die Spannungsregelung eines Asynchrongenerators ist bei dieser bekannten Einrichtung eine regelbare Impedanz vorgesehen. Die Regelung dieser Impedanz erfolgt in Abhängigkeit von der Klemmenspannung des Asynchrongenerators, so daß die Spannung des Generators auf einem möglichst konstanten Wert gehalten wird. Diese Entgegenhaltung befaßt sich somit mit dem Problem, die Spannung eines Asynchrongenerators trotz veränderlicher Drehzahl konstant zu halten.

Durch die GB-A-2 142 451 ist eine Einrichtung zur Erzeugung elektrischer Energie mittels eines Asynchrongenerators bekannt. Da bei einem solchen Asynchrongenerator im Gegensatz zu einem Synchrongenerator die Wirk- und Blindstromkomponente nicht unabhängig voneinander geregelt werden können, ist an die Ausgangsklemmen des Asynchrongenerators eine Kondensatoranordnung angeschlossen. In Abhängigkeit vom Blindstrom des Asynchrongenerators erfolgt dann eine Zu- bzw. Abschaltung eines Teiles der Kondensatoren, um auf diese Weise eine gewünschte Beeinflussung des Blindstromes zu erreichen.

Im Gegensatz zu den bekannten Einrichtungen betrifft die Erfindung eine Einrichtung zur Erzeugung elektrischer Energie, wobei diese Einrichtung einen mit einer von einem strömenden Medium angetriebenen Turbine gekuppelten Wechselstromgenerator aufweist. Bei einer solchen Einrichtung soll eine möglichst optimale Umsetzung der dargebotenen mechanischen Energie in elektrische Energie erreicht werden, ohne daß es des üblichen Steuerungsaufwandes bedarf.

Diese Aufgabe wird durch die im Anspruch 1 beschriebene Einrichtung gelöst. Bei einer solchen Einrichtung liefert der Generator von einer Mindestdrehzahl aufwärts, bei der die Polradspannung des Generators der eingeprägten Verbraucherspannung entspricht, einen Strom, dessen Größe durch die Differenzspannung, um die die Polradspannung die Verbraucherspannung übersteigt, und die Impedanz des Stromkreises bestimmt wird. Da die Einrichtung stets unterhalb der Resonanzfrequenz des aus den kapazitiven Elementen und den Induktivitäten des Generatorstromkreises gebildeten Schwingkreises betrieben wird, nimmt die Impedanz des Stromkreises mit steigender Frequenz, also steigender Generatordrehzahl ab. Gleichzeitig nimmt mit steigender Generatordrehzahl die Polradspannung und damit deren Überschuß über die Verbraucherspannung zu. Dies ergibt eine steile gleichsinnige Abhängigkeit des abgegebenen Stromes von der Generatordrehzahl. Durch passende Abstimmung der kapazitiven Elemente mit den Induktivitäten kann mit sehr guter Näherung für den Strom und damit für die abgegebene Leistung in einem Drehzahlbereich von mindestens 1:3 eine der dritten Potenz der Generatordrehzahl entsprechende Proportionalität erreicht werden. Da bekanntlich die einem strömenden Medium innewohnende Energie der dritten Potenz der Strömungsgeschwindigkeit proportional ist, kann somit ohne gesonderte Regelungs- und/oder Steuerungseinrichtungen das jeweilige Leistungsangebot des strömenden Mediums optimal in elektrische Energie umgesetzt werden. Da also keine Drehzahlsteuerung der Turbine für eine optimale Leistungsumsetzung notwendig ist, kann die Turbine ohne verstellbare Schaufeln ausgeführt werden und ist daher in ihrem Aufbau entsprechend einfach.

Die gewünschte Proportionalität des Stromes zur dritten Potenz der Generatordrehzahl wird umso besser erzielt, je geringer die Phasenverschiebung zwischen dem Strom und der Eingangsspannung des Gleichrichters ist. Eine solche der Kommutierungsblindleistung entsprechende mit der Frequenz zunehmende Phasenverschiebung läßt sich dadurch verringern oder auch ganz vermeiden, daß parallel zum Eingang des Gleichrichters Phasenschieberkondensatoren angeordnet sind oder ein gesteuerter Gleichricher vorgesehen ist, dessen Kommutierung so gesteuert ist, daß die Zufuhr von Kommutierungsblindleistung vermieden wird.

Anhand von in der Zeichnung dargestellten Ausführungsbeispielen wird die Erfindung nachfolgend näher erläutert. Es zeigt:
- FIG 1: eine Einrichtung mit zwei turbinengetriebenen, permanentmagneterregten Drehstromgeneratoren, von denen jeder über Kondensatoren und einen frequenzabhängig gesteuerten Schalter einen Gleichrichter speist und bei welcher Einrichtung die Gleichrichter ausgangsseitig an eine gemeinsame Sammelschiene angeschlossen sind, die über einen Wechselrichter mit einem Drehstromnetz verbunden ist,
- FIG 2: eine Einrichtung, bei der ein Generator über Kondensatoren, die mittels eines frequenzabhängig gesteuerten Schalters kurzschließbar sind, einen Gleichrichter speist, der an einer mit einer Batterie verbundenen Sammelschiene liegt,
- FIG 3: eine Einrichtung mit einem Generator, der pro Strang über je zwei hintereinander geschaltete Kondensatoren, von denen je einer durch einen frequenzabhängig gesteuerten Schalter kurzschließbar ist, über einen Gleichrichter auf eine Sammelschiene arbeitet,
- FIG 4: eine Einrichtung mit einem Generator, der pro Strang über je zwei parallel geschaltete Kondensatoren, von denen einer abschaltbar ist, über einen Gleichrichter auf eine Sammelschiene arbeitet und
- FIG 5: eine Einrichtung mit einem Generator, der über die Unterspannungswicklung eines Transformators einen Gleichrichter speist, wobei an die Eingangsseite des Gleichrichters Phasenschieberkondensatoren und an die Oberspannungswicklung des Transformators Kondensatoren angeschlossen sind.

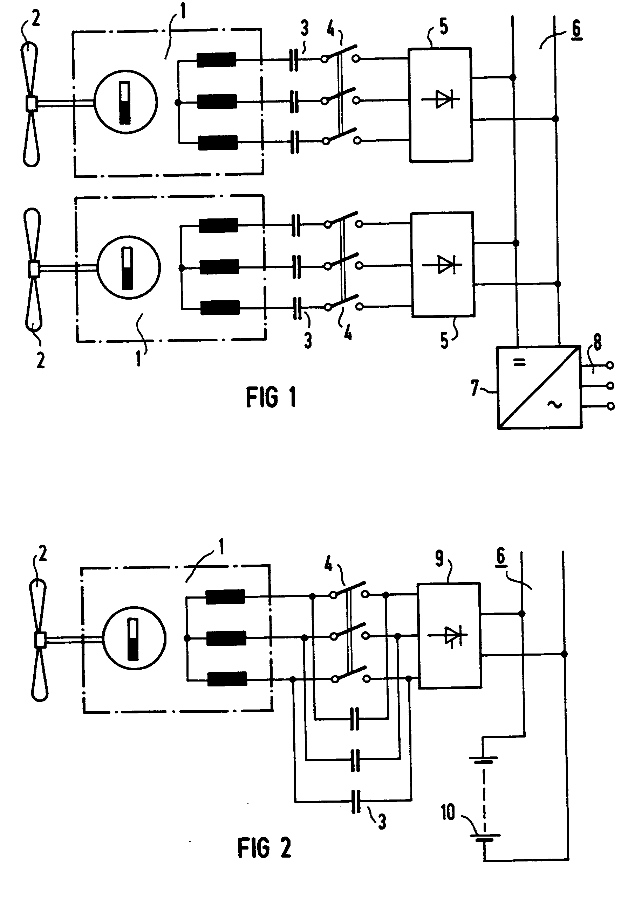

Wie bei der Einrichtung in FIG 1 dargestellt, ist als konstant erregter Generator ein permanentmagneterregter Drehstromgenerator 1 vorgesehen, der von einer Wind- oder Wasserturbine 2 angetrieben wird. Bei dem Ausführungsbeispiel ist zwar ein direkter Antrieb des Generators 1 durch die Turbine 2 angedeutet, es kann jedoch auch zwischen der Turbine 2 und dem Generator 1 je nach den Betriebsverhältnissen ein Getriebe vorgesehen werden. Jeder Strang des Drehstromgenerators 1 speist über einen Kondensator 3 und einen frequenzabhängig steuerbaren Schalter 4 einen ungesteuerten Gleichrichter 5, dessen Ausgang an einer Sammelschiene 6 liegt. Zwei oder mehr Generatoren 1 können gemeinsam an eine solche Sammelschiene 6, die über einen Wechselrichter 7 ein Drehstromnetz 8 speist, angeschlossen sein. Der Schalter 4 wird in Abhängigkeit von der im Generatorstromkreis herrschenden Frequenz f so gesteuert, daß er nur unterhalb einer Maximalfrequenz fₘₐₓ, die in ausreichendem Abstand unterhalb der Resonanzfrequenz des aus den Kondensatoren 3 und den Induktivitäten des Generatorstromkreises gebildeten Schwingkreises liegt, geschlossen ist. Übersteigt die Frequenz f im Generatorstromkreis die vorgegebene Maximalfrequenz fₘₐₓ wird der Schalter 4 geöffnet und die Anlage damit abgeschaltet. Die Turbine 2 läuft dann leer und muß fallweise durch entsprechende Steuerungsmaßnahmen gegen einen unzulässigen Anstieg ihrer Drehzahl geschützt werden.

Bei der in FIG 2 dargestellten Ausführungsvariante arbeitet der von der Turbine 2 angetriebene permanentmagneterregte Drehstromgenerator 1 über die Kondensatoren 3 auf einen steuerbaren Gleichrichter 9, der über die Sammelschiene 6 unter anderem eine Batterie speist. Die Kommutierung des steuerbaren Gleichrichters 9 wird derart gesteuert, daß auch im oberen Frequenzbereich, d.h. bei Annäherung der Frequenz f des Generatorstromkreises an die vorgegebene Maximalfrequenz fₘₐₓ die Aufnahme einer Kommutierungs-Blindleistung vermieden und damit praktisch Phasengleichheit zwischen Eingangsstrom und -spannung des Gleichrichters 9 erzielt wird. Die Kondensatoren 3 werden beim Überschreiten der Maximalfrequenz fₘₐₓ durch den frequenzabhängig gesteuerten Schalter 4, der bei dieser Ausführungsvariante zu den Kondensatoren 3 parallel geschaltet ist, kurzgeschlossen. Der Generatorstrom wird dann auf den Wert des praktisch frequenzunabhängigen Dauerkurzschlußstromes begrenzt, der durch die Auslegung des Generators auf zulässiger Größe gehalten werden kann. Bei einer derartig ausgebildeten Einrichtung wird auch nach dem Kurzschließen der Kondensatoren 3 noch eine Leistung abgegeben, die zwar nicht mehr dem Kriterium einer optimalen Leistungsumsetzung entspricht, die aber nach Betätigen des Schalters 4 einen Leerlauf der Turbine vermeidet. Somit sind beim oder nach dem Betätigen des Schalters 4 nicht unbedingt Steuerungsmaßnahmen an der Turbine nötig, durch die ein unzulässiger Drehzahlanstieg der Turbine verhindert werden muß.

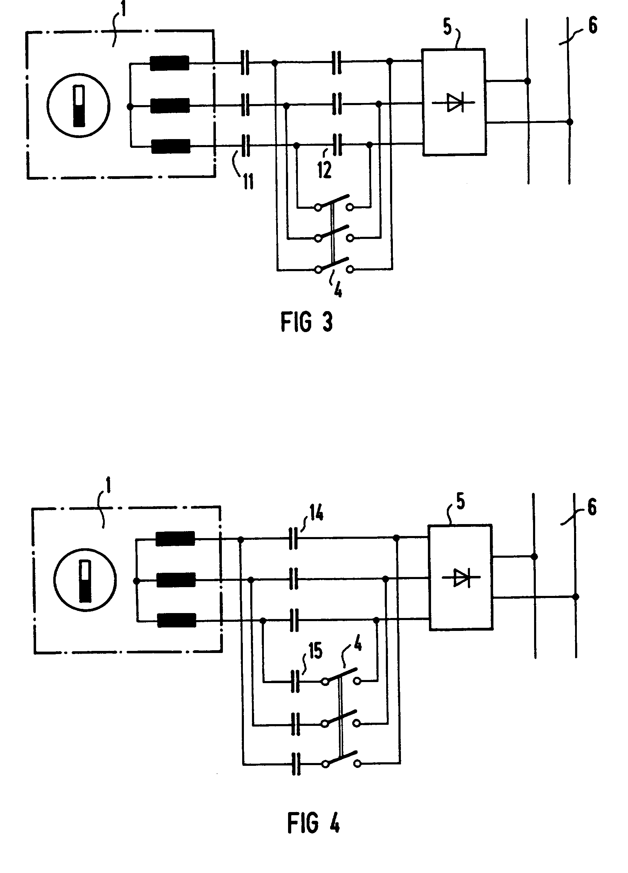

Bei der Einrichtung nach FIG 3 sind in jedem Strang des Drehstromgenerators 1 zwischen diesem und dem ungesteuerten Gleichrichter 5 zwei Kondensatoren 11 und 12 hintereinander geschaltet. Im Betrieb unterhalb der Maximalfrequenz fₘₐₓ sind die einen Kondensatoren 12 durch den frequenzabhängig gesteuerten Schalter 4 kurzgeschlossen. Die dann allein wirksamen weiteren Kondensatoren 11 ergeben durch passende Bemessung in einem größeren Drehzahlbereich die gewünschte annähernde Verhältnisgleichheit des Stromes mit der dritten Potenz der Generatordrehzahl. Bei Überschreitung der Maximalfrequenz fₘₐₓ werden durch Öffnen des Schalters 4 auch die einen Kondensatoren 12 stromdurchflossen und die Ersatzkapazität jedes Stranges ist nun durch die Hintereinanderschaltung der Kondensatoren 11 und 12 gegenüber der Kapazität der Kondensatoren 11 soweit verringert, daß die Resonanzfrequenz auf einen außerhalb jeder betrieblichen Möglichkeit liegenden Wert gehoben ist.

Die Einrichtung nach FIG 4 weist je Strang des Drehstromgenerators 1 zwei parallel geschaltete Kondensatoren 14 und 15 zwischen dem Generator 1 und dem ungesteuerten Gleichrichter 5 auf, wobei in dem einen Parallelzweig der frequenzabhängig gesteuerte Schalter 4 mit den betreffenden Kondensatoren 15 in Reihe liegt. Oberhalb der Maximalfrequenz fₘₐₓ werden die Kondensatoren 15 durch Öffnen des frequenzabhängig gesteuerten Schalters 4 abgeschaltet, was wie bei der Einrichtung nach FIG 3 eine Verringerung der wirksamen Kapazität und damit eine Anhebung der Resonanzfrequenz auf einen betriebsmäßig nicht zu erwartenden Wert der Frequenz f im Generatorstromkreis ergibt.

Die Einrichtungen nach den FIG 3 und 4 sind mit ungesteuerten Gleichrichtern 5 dargestellt. Es können jedoch auch gesteuerte Gleichrichter 9, wie bei der Einrichtung nach FIG 2 vorgesehen werden. Ferner erfolgt bei diesen beiden Einrichtungen ebenso wie bei der Einrichtung nach FIG 2 durch das Betätigen des Schalters 4 keine Abschaltung des Drehstromgenerators 1, sondern es wird im Generatorstromkreis eine kleinere Kapazität wirksam, wodurch die Impedanz im Generatorstromkreis vergrößert wird. Damit erfolgt auch in einem höheren Frequenzbereich noch ein Stromfluß und somit eine Leistungsabgabe. In diesem Bereich bleibt zwar die vom Drehstromgenerator 1 abgegebene Leistung kleiner als die maximal umsetzbare Leistung, es steigt jedoch auch hier die Leistung mit der Drehzahl an. Eine Überlastung des Drehstromgenerators 1 kann dadurch vermieden werden, daß die für diesen Bereich maximal zulässige Frequenz einen Wert erhält, der auch bei extremen, auf die Turbine wirkenden Antriebskräfte, nicht erreicht werden kann.

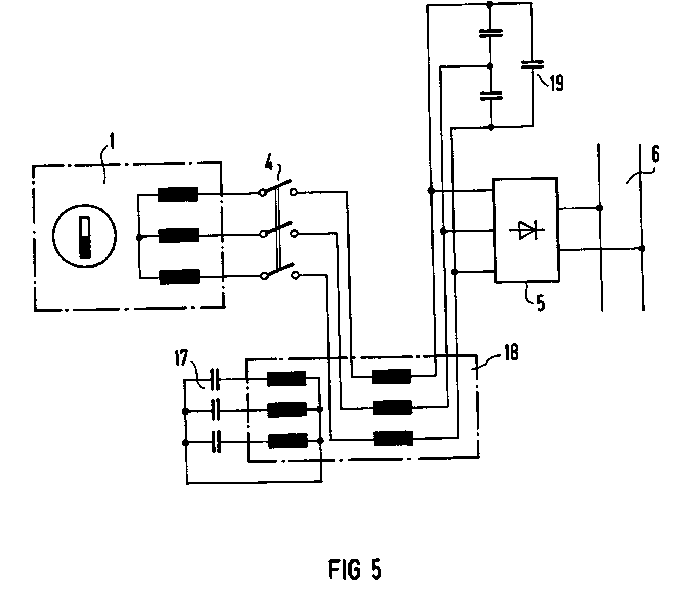

Um fallweise bei den Anordnungen nach den FIG 1-4 das Spannungsniveau der Drehstromgeneratoren senken zu können und gleichzeitig auch den Raumbedarf der Kondensatoren 3 zu vermindern, sind bei der Einrichtung nach der FIG 5 Kondensatoren 17 an die Oberspannungswicklung eines Drehstromtransformators 18 angeschlossen, dessen Unterspannungswicklung in Serie zwischen dem Drehstromgenerator 1 und dem ungesteuerten Gleichrichter 5 liegt. Bei Überschreiten der Maximalfrequenz fₘₐₓ wird der Strom durch den frequenzabhängig gesteuerten Schalter 4 unterbrochen. Der Drehstromtransformator 18 mit den Kondensatoren 17 wirkt unterspannungsseitig in gleicher Weise als kapazitives Element wie die Kondensatoren 3 bei der in FIG 1 dargestellten Einrichtung.

Um die mit der Frequenz steigende Kommutierungsblindleistung des Gleichrichters 5 zumindest teilweise zu kompensieren, sind Phasenschieberkondensatoren 19 am Eingang des Gleichrichters 5 angeschlossen. Derartige Phasenschieberkondensatoren können auch bei den Ausführungsvarianten nach den FIG 1-4 vorgesehen werden. Außerdem kann der Transformator 18 auch als Spartransformator ausgebildet sein.

Bei allen beschriebenen Anordnungen kann die permanentmagnetische Erregung des Drehstromgenerators 1 auch durch eine elektrische Erregung mit Gleichstrom ersetzt werden, die vorzugsweise vom Ausgang des Gleichrichters 5 gespeist wird. Eine derartige elektrische Erregung wird zweckmäßigerweise als konstante Erregung ausgeführt.

## Patentansprüche

1. Einrichtung zur Erzeugung elektrischer Energie, welche Einrichtung mindestens einen mit einer von einem strömenden Medium angetriebenen Turbine (2) gekuppelten, vorzugsweise mehrphasigen, Wechselstromgenerator (1) aufweist, der über kapazitive Elemente (3 bzw.11,12 bzw.14,15 bzw.17,18) an einen Gleichrichter (5 bzw.9) mit eingeprägter Ausgangsspannung angeschlossen ist, bei welcher Einrichtung ferner die kapazitiven Elemente (3 bzw.11,12 bzw.14,15 bzw.17,18) in bezug auf die im Generatorstromkreis vorhandenen Induktivitäten so bemessen oder steuerbar sind, daß die Resonanzfrequenz des aus den kapazitiven Elementen (3 bzw.11,12 bzw.14,15 bzw. 17,18) und den Induktivitäten gebildeten Schwingkreises über der höchsten betriebsmäßig auftretenden Frequenz liegt.

2. Einrichtung nach Anspruch 1, bei welcher der Wechselstromgenerator (1) mit konstanter Erregung versehen ist.

3. Einrichtung nach Anspruch 2, bei welcher der Wechselstromgenerator (1) durch Permanentmagnete erregt ist.

4. Einrichtung nach einem oder mehreren der vorhergehenden Ansprüche, bei der der Gleichrichter (9) steuerbare Gleichrichterelemente aufweist.

5. Einrichtung nach einem oder mehreren der vorhergehenden Ansprüche, bei der zwischen dem Wechselstromgenerator (1) und dem Gleichrichter (5 bzw.9) ein frequenzabhängig gesteuerter Schalter (4) angeordnet ist.

6. Einrichtung nach Anspruch 5, bei der der Schalter (4) in Reihe zum Wechselstromgenerator (1) und dem Gleichrichter (5 bzw.9) liegt.

7. Einrichtung nach Anspruch 5, bei der der Schalter (4) parallel zu den kapazitiven Elementen (3) angeordnet ist.

8. Einrichtung nach Anspruch 5, bei der je Strang des Wechselstromgenerators (1) wenigstens zwei kapazitive Elemente (11 und 12) hintereinander geschaltet sind, wobei der Schalter (4) parallel zu einem dieser Elemente (12) liegt.

9. Einrichtung nach Anspruch 5, bei der je Strang des Wechselstromgenerators (1) wenigstens zwei parallel geschaltete kapazitive Elemente (14 und 15) angeordnet sind und eines dieser Elemente (15) durch den Schalter (4) abschaltbar ist.

10. Einrichtung nach einem oder mehreren der vorhergehenden Ansprüche, bei der zumindest ein Teil der kapazitiven Elemente Kondensatoren (3 bzw.11 und 12 bzw.14 und 15) sind.

11. Einrichtung nach einem oder mehreren der vorhergehenden Ansprüche, bei der mindestens ein Teil der kapazitiven Elemente aus einem Transformator (18) mit an dessen Oberspannungswicklung angeschlossenen Kondensatoren (17) besteht, wobei die Unterspannungswicklung des Transformators (18) im Stromkreis des Wechselstromgenerators (1) liegt.

12. Einrichtung nach Anspruch 11, bei der der Transformator (18) in Sparschaltung ausgebildet ist.

13. Einrichtung nach einem oder mehreren der vorhergehenden Ansprüche, bei der parallel zum Eingang des Gleichrichters (5) Phasenschieberkondensatoren (19) angeordnet sind.

## Claims

1. Device for generating electrical energy, which device has at least one, preferably multi-phase, alternating-current generator (1) which is coupled with a turbine (2) driven by a flowing medium and which is connected by way of capacitive elements (3 or 11, 12 or 14, 15 or 17, 18) to a rectifier (5 or 9 respectively) with impressed output voltage, in which device, furthermore, the capacitive elements (3 or 11, 12 or 14, 15 or 17, 18) are rated or can be controlled in relation to the inductances present in the generator electric circuit in such a way that the resonant frequency of the oscillating circuit, which is formed from the capacitive elements (3 or 11, 12 or 14, 15 or 17, 18) and the inductors, lies above the highest frequency which occurs under field conditions

2. Device according to claim 1, wherein the alternating-current generator (1) is provided with constant excitation.

3. Device according to claim 2, wherein the alternating-current generator (1) is excited by permanent magnets.

4. Device according to one or more of the preceding claims, wherein the rectifier (9) has controllable rectifier elements.

5. Device according to one or more of the preceding claims, wherein arranged between the alternating-current generator (1) and the rectifier (5 or 9 respectively) there is a switch (4) which is controlled in a frequency-dependent manner.

6. Device according to claim 5, wherein the switch (4) is connected in series with the alternating-current generator (1) and the rectifier (5 or 9 respectively).

7. Device according to claim 5, wherein the switch (4) is arranged in parallel with the capacitive elements (3).

8. Device according to claim 5, wherein for each phase of the alternating-current generator (1) there are at least two capacitive elements (11 and 12) which are connected in series, with the switch (4) being connected in parallel with one of these elements (12).

9. Device according to claim 5, wherein for each phase of the alternating-current generator (1) there are at least two capacitive elements (14 and 15) which are connected in parallel and one of these elements (15) can be switched off by means of the switch (4).

10. Device according to one or more of the preceding claims, wherein at least one component of the capacitive elements is constituted by capacitors (3 or 11 and 12, or 14 and 15 respectively).

11. Device according to one or more of the preceding claims, wherein at least one component of the capacitive elements consists of a transformer (18) with capacitors (17) which are connected to the high-voltage winding of said transformer (18), with the low-voltage winding of the transformer (18) being connected in the electric circuit of the alternating-current generator (1).

12. Device according to claim 11, wherein the transformer (18) is configured in an economizing circuit arrangement.

13. Device according to one or more of the preceding claims, wherein phase-shifting capacitors (19) are arranged in parallel with the input of the rectifier (5).

## Revendications

1. Dispositif de production d'énergie électrique, qui comporte au moins une génératrice (1) de courant alternatif de préférence polyphasé, qui est accouplée à une turbine (2) entraînée par un fluide en écoulement et qui est raccordée par l'intermédiaire d'éléments capacitifs (3 ou 11,12 ou 14,15 ou 17,18) à un redresseur (5 ou 9) à tension de sortie imposée, et dans lequel en outre les éléments capacitifs (3 ou 11,12 ou 14,15 ou 17,18) sont dimensionnés ou peuvent être commandés, en rapport avec les inductances présentes dans le circuit de la génératrice, de telle sorte que la fréquence de résonance du circuit oscillant formé des éléments capacitifs (3 ou 11,12 ou 14,15 ou 17,18) et des inductances, soit supérieure à la fréquence maximale apparaissant pendant le fonctionnement.

2. Dispositif suivant la revendication 1, dans lequel la génératrice de courant alternatif (1) a une excitation constante.

3. Dispositif suivant la revendication 2, dans lequel la génératrice de courant alternatif (1) est excitée par des aimants permanents.

4. Dispositif suivant une ou plusieurs des revendications précédentes, dans lequel le redresseur (9) comporte des éléments redresseurs commandables.

5. Dispositif suivant une ou plusieurs des revendications précédentes, dans lequel un interrupteur (4), commandé en fonction de la fréquence, est disposé entre la génératrice de courant alternatif (1) et le redresseur (5 ou 9).

6. Dispositif suivant la revendication 5, dans lequel l'interrupteur (4) est branché en série avec la génératrice de courant alternatif (1) et avec le redresseur (5 ou 9).

7. Dispositif suivant la revendication 5, dans lequel l'interrupteur (4) est branché en parallèle avec les éléments capacitifs (3).

8. Dispositif suivant la revendication 5, dans lequel au moins deux éléments capacitifs (11 et 12) sont branchés en série l'un derrière l'autre, dans chaque phase de la génératrice de courant alternatif (1), l'interrupteur (4) étant branché en parallèle avec l'un de ces éléments (12).

9. Dispositif suivant la revendication 5, dans lequel au moins deux éléments capacitifs branchés en parallèle (14 et 15) sont prévus dans chaque phase de la génératrice de courant alternatif (1), et l'un de ces éléments (15) peut être débranché par l'interrupteur (4).

10. Dispositif suivant une ou plusieurs des revendications précédentes, dans lequel au moins une partie des éléments capacitifs est formée de condensateurs (3 ou 11 et 12 ou 14 et 15).

11. Dispositif suivant une ou plusieurs des revendications précédentes, dans lequel au moins une partie des éléments capacitifs est constituée d'un transformateur (18), à l'enroulement à haute tension duquel sont raccordés des condensateurs (17), l'enroulement à basse tension du transformateur (18) étant dans le circuit de la génératrice à courant alternatif (1).

12. Dispositif suivant la revendication 11, dans lequel le transformateur (18) est sous la forme d'un circuit économique.

13. Dispositif suivant une ou plusieurs des revendications précédentes, dans lequel des condensateurs de déphasage (19) sont branchés en parallèle avec l'entrée du redresseur (5).
